# EUROPÄISCHE PATENTSCHRIFT

(11) **EP 2 668 078 B1**
(45) Veröffentlichungstag und Bekanntmachung des Hinweises auf die Patenterteilung: **24.07.2019**
(21) Anmeldenummer: 12701120.3
(22) Anmeldetag: 25.01.2012
(51) Int. Cl.: B61C 3/00, B61D 17/18, B61D 27/00

(54) **KÜHLUNG VON EINRICHTUNGEN EINES SCHIENENFAHRZEUGS**
COOLING OF DEVICES OF A RAIL VEHICLE
REFROIDISSEMENT DE DISPOSITIFS D'UN VÉHICULE FERROVIAIRE

(30) Priorität: 27.01.2011 DE 102011009578
(43) Veröffentlichungstag der Anmeldung: 04.12.2013
(73) Patentinhaber: Bombardier Transportation GmbH, 10785 Berlin (DE)
(72) Erfinder: FISCHER, Michael, A-1210 Wien (AT); KÖNIG, Helmut, A-1220 Wien (AT); ZENGERLE, Manfred, 67280 Ebertsheim (DE)
(74) Vertreter: Patentanwälte Bressel und Partner mbB
(86) Internationale Anmeldenummer: PCT/EP2012/051120
(87) Internationale Veröffentlichungsnummer: WO 2012/101161

(56) Entgegenhaltungen:
- WO-A2-2008/006679
- DE-A1- 19 914 565
- DE-A1-102007 046 368
- DE-C1- 19 654 633

## Beschreibung

Die Erfindung betrifft ein Schienenfahrzeug mit zumindest einer zu kühlenden Einrichtung, die außerhalb des Innenraums eines Wagenkastens des Schienenfahrzeugs angeordnet ist. Die Erfindung betrifft ferner ein Verfahren zum Herstellen eines solchen Schienenfahrzeugs. Außerdem betrifft die Erfindung ein Verfahren zum Betreiben eines solchen Schienenfahrzeugs.

Insbesondere betrifft die Erfindung die Kühlung von elektrischen und/oder elektronischen und/oder anderer zu kühlender Einrichtungen von Schienenfahrzeugen. Dabei handelt es sich z.B. um Konverter, insbesondere Wechselrichter, wie z.B. Traktionswechselrichter, Hilfsbetriebewechselrichter und Klimagerätewechselrichter. Es ist üblich, mit solchen Wechselrichtern Gleichstrom aus einem Zwischenkreis oder einer Gleichstromversorgung in Wechselstrom umzuwandeln und mit dem Wechselstrom die jeweiligen weiteren Einrichtungen des Schienenfahrzeugs zu betreiben. Alternativ oder zusätzlich handelt es sich bei den zu kühlenden Einrichtungen, die außerhalb des Fahrzeugs angeordnet sind, um Kondensatoren für Filter oder zur Energiespeicherung und/oder um andere Energiespeicher. Auch Einrichtungen zur Rückgewinnung von elektrischer Energie aus kinetischer Energie des Fahrzeugs können sich außerhalb des Fahrzeugs befinden und zumindest Komponenten aufweisen, die zu kühlen sind.

Die Anordnung derartiger Einrichtungen außerhalb des Fahrzeugs hat in gemäßigten Breiten und kühleren Klimazonen den Vorteil, dass die verhältnismäßig kühle Außentemperatur ausreichend ist, und die Einrichtungen nur selten unter die Außentemperatur gekühlt werden müssen. Auch hat die Anordnung außerhalb des Wagenkasten-Innenraums den Vorteil, dass im Innenraum mehr Platz zur Verfügung steht. Speziell bei Straßenbahnen und anderen leichten Schienenfahrzeugen sind die Einrichtungen auf dem Dach oder im Dach des Schienenfahrzeugs angeordnet, insbesondere um den Boden des Wagenkasten-Innenraums möglichst tief zu legen und so das Einsteigen und Aussteigen von Passagieren zu erleichtern. Die Erfindung betrifft insbesondere das Kühlen der in diesem Absatz und davor genannten Einrichtungen.

In wärmeren Klimazonen kommt es jedoch zum Ausfall solcher Einrichtungen wegen Überhitzung, wenn die Einrichtungen nicht aktiv gekühlt werden, d.h. wenn nicht eine zusätzliche Kühleinrichtung betrieben wird, um die Einrichtungen zu kühlen. Eine Alternative zur Kühlung oder eine zusätzliche Maßnahme ist die Steuerung der jeweiligen Einrichtung abhängig von der Betriebstemperatur. Steigt die Betriebstemperatur z.B. über einen vorgegebenen Grenzwert, wird die Leistung der Einrichtung reduziert. Dies ist jedoch nicht bei allen Typen von Einrichtungen möglich. Z.B. kann der Leistungsbedarf von Hilfsbetrieben, die für die Sicherheit des Fahrzeugs von Bedeutung sind, nicht oder nur geringfügig reduziert werden.

Es ist daher bereits vorgeschlagen worden, unterflur, d.h. unterhalb des Wagenkastens, angeordnete Einrichtungen mit einer Kühlanordnung zu kühlen. EP 2038154 B1 beschreibt ein Schienenfahrzeug mit einer solchen Kühlanordnung.

Nachteilig an dem Einsatz einer zusätzlichen Kühleinrichtung ist jedoch der zusätzliche Energieverbrauch.

DE 102007046368 A1 offenbart ein Verfahren eines Energiespeichers in einem Schienenfahrzeug mit Luft. Luft aus einem bereits gekühlten oder klimatisierten Raum des Schienenfahrzeuges wird direkt zum Energiespeicher geleitet. Der Energiespeicher ist beispielsweise im Schienenfahrzeug oder außerhalb des Schienenfahrzeuges angeordnet. Beispielsweise ist er auf dem Dach oder unter dem Boden des Schienenfahrzeuges angeordnet. Beispielsweise wird die Luft durch eine Öffnung im Wagenkasten des Schienenfahrzeuges zum Energiespeicher geleitet. Die Öffnung kann sich in der Seitenwand, im Dach oder im Boden des Wagenkastens befinden.

DE 19654633 C1 offenbart ein Heizungs- und Lüftungssystem für Fahrgasträume in Schienenfahrzeugen. Auf dem Dach des Fahrzeuges ist ein zentrales Klimaaggregat angeordnet. Im Dachraum des Fahrzeuges erstreckt sich über die gesamte Fahrzeuglänge ein Doppelluftkanal, dessen Teilluftkanäle als Kühlluftkanal und als Heizluftkanal ausgebildet und mit dem Klimaaggregat verbunden sind.

Es ist daher eine Aufgabe der vorliegenden Erfindung, ein Schienenfahrzeug und Verfahren der eingangs genannten Art anzugeben, die bei effizientem Einsatz von Primärenergie den Ausfall oder die Leistungsreduktion von außerhalb des Wagenkastens angeordneten Einrichtungen eines Schienenfahrzeugs vermeiden.

Die beigefügten Patentansprüche definieren den Schutzumfang.

Ein Grundgedanke der vorliegenden Erfindung besteht darin, bereits gekühlte Luft aus dem Innenraum des Wagenkastens abzuleiten und zur Kühlung der zumindest einen zu kühlenden Einrichtung außerhalb des Wagenkasten-Innenraums ("externe Einrichtung") zu nutzen. Bei der abgeleiteten Luft handelt es sich insbesondere um Abluft. Solche Abluft muss ohnehin aus dem Innenraum abgeleitet werden, da die Luft durch das Atmen der in dem Innenraum befindlichen Personen mit Kohlendioxyd und gegebenenfalls weiteren gasförmigen oder anderen Komponenten angereichert wird. Klimasysteme von Schienenfahrzeugen und Belüftungsanlagen von Schienenfahrzeugen weisen daher ohnehin Mittel zum Ableiten von Abluft aus dem Innenraum auf. Bevorzugtermaßen werden diese Mittel jedoch zum Zweck der Kühlung der externen Einrichtung so modifiziert oder sind so ausgestaltet, dass die Abluft zu der zumindest einen externen Einrichtung geführt wird und diese kühlt. Dies schließt allerdings nicht aus, dass zumindest ein Teil der zum Kühlen der zumindest einen externen Einrichtung verwendeten Luft wieder in den Wagenkasten-Innenraum zurückgeleitet wird, auch wenn eine solche Rezirkulation der Kühlluft nicht bevorzugt wird. Es ist allerdings üblich, um einen Luftstrom von ausreichender Stärke sowie gewünschter Temperatur und Frischheit durch den Wagenkasten-Innenraum zu gewährleisten, einen Teil der aus dem Innenraum abgeleiteten Luft mit Frischluft zu mischen und wieder in den Wagenkasten-Innenraum zu rezirkulieren. Bei der bevorzugten Ausgestaltung der Erfindung gibt es auch eine solche Rezirkulation. Allerdings wird dabei nicht die zum Kühlen der zumindest einen externen Einrichtung verwendete Kühlluft rezirkuliert.

Die Erfindung beruht auf dem Grundgedanken, dass in warmen Klimazonen, aber auch im Sommer von gemäßigten Klimazonen der Innenraum des Wagenkastens mit gekühlter Luft versorgt werden muss. Dabei kann ein Kühlbedarf bereits dann bestehen, wenn die Außentemperaturen, d.h. die Lufttemperaturen in der Umgebung des Schienenfahrzeugs, noch in einem für die Personen komfortablen Temperaturbereich liegen. Die Luft in dem Innenraum des Wagenkastens würde sich ohne Kühlung dennoch auf unkomfortable Temperaturen erhöhen, da beim Betrieb des Schienenfahrzeugs Abwärme produziert wird, die zumindest teilweise auch in den Innenraum des Wagenkastens für Personen gelangt oder durch Personen selbst verursacht wird. Außerdem kann die solare Einstrahlung die Innenraumtemperatur deutlich erhöhen.

Da somit beim Betrieb des Schienenfahrzeugs insbesondere mit warmer Umgebungsluft Luft für den Wagenkasten-Innenraum gekühlt wird, kann Luft aus dem Innenraum zur Kühlung der zumindest einen externen Einrichtung genutzt werden. Auch wenn sich die von der Kühleinrichtung der Klimaanlage gekühlte Luft, die in den Innenraum eingeleitet wurde, im Wagenkasten-Innenraum erwärmt hat, ist die Temperatur der Luft noch immer deutlich geringer als die Luft in der Umgebung des Schienenfahrzeugs, wenn Kühlbedarf für die zumindest eine externe Einrichtung besteht. Ein solcher Kühlbedarf kann unter Umständen auch bei moderaten Außenlufttemperaturen bestehen. Wie bereits erwähnt, besteht in der Regel dann aber auch Kühlbedarf für den Wagenkasten-Innenraum.

Die Erfindung schließt nicht aus, dass für extreme Betriebssituationen mit besonders hohen Außenlufttemperaturen oder extrem starker solarer Einstrahlung auch noch eine zusätzliche Kühleinrichtung ausschließlich für die Kühlung der zumindest einen externen Einrichtung vorhanden ist. Im Vergleich zu der Situation, die z.B. in der oben erwähnten EP 2 038 154 B1 beschrieben wird, kann die Kühlleistung der zusätzlichen Kühleinrichtung aber zumindest reduziert werden, da Luft aus dem Wagenkasten-Innenraum zur Kühlung der externen Einrichtung benutzt wird.

Die Kühlung von externen Einrichtungen kann grundsätzlich mit verschiedenen Kühlmedien bewirkt werden. Bei den Kühlmedien kann es sich um Gase, insbesondere Luft, oder Flüssigkeiten handeln. Die erfindungsgemäße Nutzung von Luft aus dem Wagenkasten-Innenraum hat den Vorteil, dass sie besonders gut für die Kühlung der externen Einrichtung geeignet ist, denn sie ist, wie aus dem Betrieb von Klimaanlagen in Schienenfahrzeugen üblich, gefiltert, entfeuchtet und beruhigt, d.h. die Strömungsgeschwindigkeit ist gleichmäßig und liegt üblicherweise im laminaren Strömungsbereich. Es müssen auch keine speziellen Kanäle für das Führen von flüssigen Kühlmedien vorgesehen werden und es bestehen keine Probleme mit etwaigen Undichtigkeiten der Kühlluftführung, da die Luft ohnehin an die Umgebung entlassen wird.

Insbesondere kann das Schienenfahrzeug neben den Ventilatoren der Klimaanlage auch zumindest einen Ventilator aufweisen, der die Luft aus dem Wagenkasten-Innenraum zu der zumindest einen externen Einrichtung strömen lässt. Insbesondere kann der Ventilator nahe bei der externen Einrichtung angeordnet sein, so dass er stromaufwärts, Richtung Wagenkasten-Innenraum, einen Unterdruck erzeugt, der die Luft aus dem Wagenkasten-Innenraum in Richtung externer Einrichtung strömen lässt, sofern der statische Druck durch die Ventilatoren der Klimaanlage nicht ausreichend ist.

Da in der Regel jedoch der Innenraum aufgrund der Ventilatoren der Kühlungseinrichtung unter Überdruck steht, reicht dieser Überdruck meist zur Ableitung der Abluft aus.

Es wird ein Schienenfahrzeug gemäß Anspruch 1 vorgeschlagen.

Der Innenraum des Wagenkastens kann unterteilt sein. Insbesondere kann ein separater Raum für den Fahrer vorgesehen sein. Dementsprechend kann es mehr als eine Auslassöffnung geben, von der die Abluftführung zu der zumindest einen externen Einrichtung führt. Daher kann die Abluftführung auch aus mehreren Luftleitungen bestehen, welche untereinander miteinander verbunden sein können oder völlig getrennt voneinander sein können. Es muss sich auch nicht in jedem Abteil oder getrennten Raum des Wagenkasten-Innenraums eine Auslassöffnung befinden, von der Luft zum Kühlen der externen Einrichtung oder der externen Einrichtungen abgeleitet wird.

Insbesondere kann die elektrische und/oder elektronische Einrichtung auf dem Dach und/oder in dem Dach des Wagenkastens angeordnet sein und führt die Abluftführung aus dem Innenraum des Wagenkastens heraus zu der Einrichtung. In diesem Fall ist vorzugsweise auch die Kühleinrichtung auf dem Dach und/oder in dem Dach des Wagenkastens angeordnet. Dabei können sich die Kühleinrichtung und zumindest eine der zu kühlenden Einrichtungen an verschiedenen Längsabschnitten des Dachs befinden. Dies erleichtert es, einerseits die von der Kühleinrichtung gekühlte Luft insbesondere entlang dem Dach zu den gewünschten Bereichen des Innenraums zu führen und andererseits die Abluft aus dem Innenraum wiederum entlang dem Dach zu der zumindest einen zu kühlenden Einrichtung zu führen.

Z.B. kann die Abluftführung einen ersten Luftkanal aufweisen, der entlang dem Dach des Wagenkastens verläuft (insbesondere in Längsrichtung, d.h. in Fahrtrichtung des Schienenfahrzeugs). Der erste Luftkanal kann Teil einer Decke des Innenraums sein, wobei ein zweiter Kanal der Decke ausgestaltet ist, die von der Kühleinrichtung gekühlte Luft zu zumindest einer Einlassöffnung zu führen, durch die beim Betrieb des Schienenfahrzeugs die gekühlte Luft in den Innenraum eingeleitet wird.

Wenn, wie zuvor beschrieben, sich die Kühleinrichtung und zumindest eine der zu kühlenden Einrichtungen an verschiedenen Längsabschnitten des Dachs befinden, können in einem ersten Längsabschnitt, in dem sich die zu kühlende Einrichtung befindet, der erste Luftkanal und der zweite Kanal parallel zueinander verlaufen. Dagegen kann sich in einem zweiten Längsabschnitt, in dem die Kühleinrichtung angeordnet ist, der zweite Kanal erstrecken und ein anderer, dritter Luftkanal parallel zu dem zweiten Kanal, wobei der dritte Luftkanal insbesondere dazu genutzt werden kann, Abluft aus dem Innenraum zu rezirkulieren. Z.B. wird dieser Teil der Abluft mit Frischluft, die aus der Fahrzeugumgebung angesaugt wurde und die von der Kühleinrichtung gekühlt wurde, gemischt.
Da sich die Kühleinrichtung und zumindest eine der zu kühlenden Einrichtungen in verschiedenen Längsabschnitten des Dachs befinden, sind in jedem der Längsabschnitte lediglich zwei parallel verlaufende Kanäle erforderlich. Einer dieser beiden parallel verlaufenden Kanäle ist der zweite Kanal für die Führung der gekühlten Luft in den Innenraum. Der andere Kanal ist ein Abluftkanal, der in dem einen Abschnitt des Dachs für die Kühlung der zu kühlenden Einrichtung genutzt wird und in dem anderen Abschnitt des Dachs für die Rezirkulation genutzt wird. Insbesondere können mehrere, voneinander getrennte Abschnitte des Dachs vorhanden sein, in denen sich jeweils zumindest eine zu kühlende Einrichtung befindet und daher jeweils ein erster Luftkanal für die Abluftführung zu den zu kühlenden Einrichtungen vorhanden ist.

Insbesondere im Fall eines Großraum-Wagens mit Sitzplätzen für mehr als 10 und insbesondere mehr als 20 Passagieren, wird es bevorzugt, dass sich die Auslassöffnung unterhalb der Decke des Innenraums, vorzugsweise im Bereich des Bodens des Innenraums, befindet und ein Abschnitt der Abluftführung von unten nach oben zu der Decke des Innenraums führt. In diesem befindet sich zumindest eine Einlassöffnung zum Einlassen von gekühlter Luft in den Innenraum im oberen Bereich des Innenraums, insbesondere an der Decke des Innenraums. Die gekühlte Luft strömt daher oben im Innenraum ein und wird unten am Innenraum oder im Innenraum durch die zumindest eine Auslassöffnung abgeleitet. Dies gewährleistet, dass zumindest ein großer Bereich in vertikaler Richtung des Innenraums von Luft durchströmt wird und daher nicht nur in einem kleinen Teil des Innenraums ein Luftaustausch stattfindet. Auch erlaubt der Einlass im oberen Bereich eine Luftzuführung der Frischluft in Deckenkanälen.

In einem von dem Bereich für die Passagiere getrennten Teil für den Fahrer wird eine in umgekehrter Richtung, von unten nach oben strömende Luft, bevorzugt. In diesem Fall strömt die von der Kühleinrichtung gekühlte Luft im unteren Teil des Innenraums in diesen ein und im oberen Teil des Innenraums aus zumindest einer Auslassöffnung in die Abluftführung.

In allen Fällen kann die Abluftführung nicht nur dazu genutzt werden, Luft aus dem Innenraum zu der zumindest einen externen Einrichtung zu führen, um diese zu kühlen, sondern auch um Luft zu rezirkulieren (siehe oben). Insbesondere wenn ein Abschnitt der Abluftführung von unten nach oben zu der Decke des Innenraums führt, kann sich am Ende des Abschnitts die Verzweigung befinden. In einem Zweig der Verzweigung strömt Luft zu der zumindest einen externen Einrichtung, um diese zu kühlen. In dem anderen Zweig der Verzweigung strömt Luft für die Rezirkulation in den Innenraum. Auch bei anderen Ausgestaltungen der Abluftführung ist eine solche Verzweigung vorhanden. Diese Verzweigung ist mit zumindest einem Ventil oder einer anderen Stelleinrichtung zur Einstellung des Luftströmungswiderstandes kombiniert. Dies kann dazu genutzt werden, den Strömungswiderstand in zumindest einem der Zweige so einzustellen, dass ein gewünschter Anteil der aus dem Innenraum abgeleiteten Abluft zu der zumindest einen externen Einrichtung geleitet wird. Dadurch kann die Kühlwirkung eingestellt werden.

Alternativ kann die Abluft zum Kühlen externer Einrichtungen und die Abluft zur Rezirkulation durch separate Abluftkanäle direkt aus dem Innenraum abgeleitet werden. Insbesondere kann die für die Kühlung verwendete Abluft durch zumindest eine Öffnung in einem Kanal eines Deckenelements aus dem Innenraum in den Kanal einströmen und zu der zu kühlenden, externen Einrichtung geleitet werden.

Wenn, wie oben beschrieben, in der Decke oder an der Decke des Innenraums zumindest zwei parallel verlaufende Luftkanäle für die Zuführung gekühlter Luft in den Innenraum und Ableitung von Abluft aus dem Innenraum angeordnet ist, können die beiden Luftkanäle durch ein gemeinsames Deckenmodul gebildet sein. Solche Deckenmodule mit gleichem Querschnitt quer zur Strömungsrichtung der Luft können auch entlang den oben beschriebenen verschiedenen Dachabschnitten verlaufen, in denen sich entweder die Kühleinrichtung oder eine zu kühlende Einrichtung befindet. Der Abluftkanal wird dann wahlweise, je nach Dachabschnitt, zur Zuführung von Luft zu der zumindest einen zu kühlenden Einrichtung oder zur Rezirkulation von Luft in den Innenraum genutzt.

Um die zumindest eine zu kühlende Einrichtung zu kühlen, kann die Einrichtung selbst zumindest einen Luftführungskanal aufweisen, der an die Abluftführung angeschlossen ist. Alternativ oder zusätzlich kann sich die Einrichtung in einem Gehäuse befinden, das zumindest einen entlang der Einrichtung führenden Luftführungskanal aufweist, der an die Abluftführung angeschlossen ist. Eine weitere Möglichkeit besteht darin, dass sich an der Einrichtung Kühlrippen befinden, die von der Abluft angeströmt werden, welche durch die Abluftführung zugeführt wird. Die Kühlung von elektrischen und/oder elektronischen Einrichtungen mit Kühlluft ist an sich bekannt und wird daher hier nicht näher beschrieben.

Ferner wird ein Verfahren zum Herstellen eines Schienenfahrzeugs gemäß Anspruch 7 vorgeschlagen.

Vorteile und Ausgestaltungen des Verfahrens ergeben sich aus der Beschreibung des Schienenfahrzeugs sowie aus den beigefügten Patentansprüchen.

Ausführungsbeispiele der Erfindung werden nun unter Bezugnahme auf die beigefügte Zeichnung beschrieben. Die einzelnen Figuren der Zeichnung zeigen:
- Fig. 1: schematisch eine Seitenansicht eines Schienenfahrzeugs mit einer Kühleinrichtung und zwei außerhalb eines Wagenkasten-Innenraums angeordneten zu kühlenden Einrichtungen,
- Fig. 2: eine perspektivische Darstellung von Einrichtungen und Luftkanälen eines Schienenfahrzeugs zur Darstellung eines besonders bevorzugten Ausführungsbeispiels,
- Fig. 3: eine perspektivische Darstellung von zwei Deckenmodulen, die insbesondere in der in Fig. 2 dargestellten Anordnung Verwendung finden können,
- Fig. 4: die Anordnung der beiden Deckenmodule gemäß Fig. 3 in perspektivischer Darstellung aus einem anderen Blickwinkel, wobei jedoch das links unten in Fig. 4 dargestellte Deckenmodul nur teilweise dargestellt ist, so dass der Blick in das Innere von Luftkanälen freigegeben ist,
- Fig. 5: eine perspektivische Darstellung eines Teils der Anordnung in Fig. 4, wobei im Wesentlichen das links unten in Fig. 4 dargestellte Deckenmodul dargestellt ist und lediglich ein Teil des anderen Deckenmoduls, und
- Fig. 6: der in Fig. 3 und Fig. 4 rechts oben dargestellte Teil des anderen Deckenmoduls, wobei dieser Teil vorne aufgeschnitten dargestellt ist, um das Innere von Luftkanälen zu zeigen.

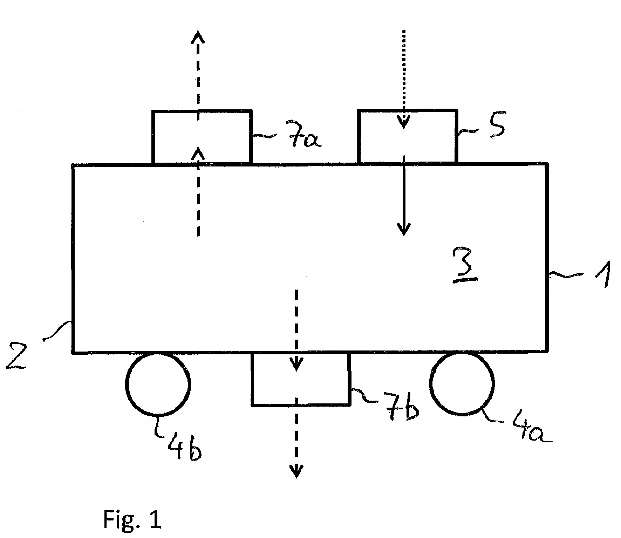

Fig. 1 zeigt schematisch ein Schienenfahrzeug 1 mit einem Wagenkasten 2 und Rädern 4a, 4b. Auf dem Dach des Wagenkastens 2 ist eine Kühleinrichtung 5 angeordnet, die (wie durch einen gepunkteten Pfeil dargestellt) Luft aus der Umgebung des Schienenfahrzeugs ansaugt und (wie durch einen Pfeil mit durchgehender Linie dargestellt) gekühlte Luft in den Innenraum 3 des Wagenkastens 2 abgibt.

Aus dem Innenraum 3 wird Abluft zu verschiedenen elektrischen und/oder elektronischen und/oder anderen kühlungsbedürftigen Einrichtungen 7a, 7b außerhalb des Innenraums 3 geführt (wie durch Pfeile mit gestrichelten Linien dargestellt). Die Einrichtung 7a befindet sich auf dem Dach des Wagenkastens 2. Die Einrichtung 7b befindet sich unterflur, unter dem Boden des Wagenkastens 2.

Dadurch, dass die Kühleinrichtung 5 Luft aus der Umgebung abkühlt und in den Wagenkasten 2 einleitet und diese kühlere Luft den Einrichtungen 7a, 7b zugeführt wird, werden die Einrichtungen 7a, 7b gekühlt. Zur Kühlung der Einrichtungen 7a, 7b ist in dem hier beschriebenen Ausführungsbeispiel keine zusätzliche Kühleinrichtung erforderlich.

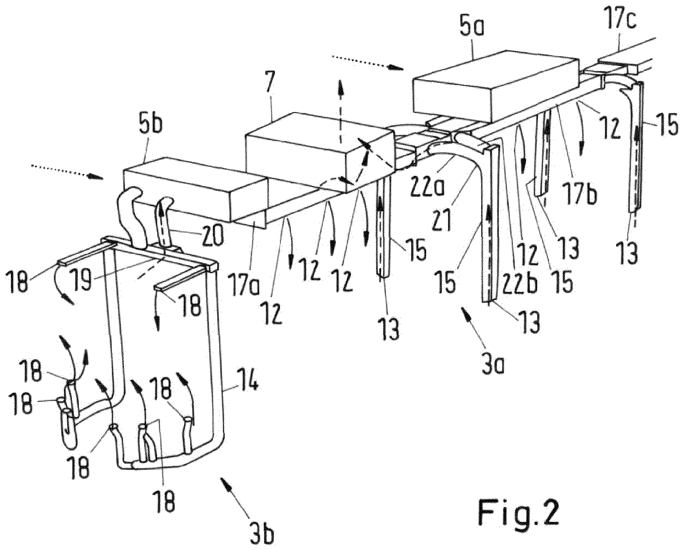

Fig. 2 zeigt eine erste Kühleinrichtung 5a und eine zweite Kühleinrichtung 5b, die jeweils auf dem Dach eines nicht dargestellten Schienenfahrzeug-Wagenkastens angeordnet sind. Die erste Kühleinrichtung 5a saugt Umgebungsluft an und kühlt diese, damit die gekühlte Luft einem Passagierraum 3a im Inneren des Wagenkastens des Schienenfahrzeugs zugeführt wird. Die zweite Kühleinrichtung 5b saugt ebenfalls Luft aus der Umgebung an, kühlt diese und führt sie dem Fahrerabteil 3b zu. Der Wagenkasten und die Trennwände des Passagierraums 3a und des Fahrerabteils 3b sind in Fig. 2 nicht dargestellt, um den Blick auf die Luftkanäle freizugeben.

Die von der ersten Kühleinrichtung 5a gekühlte Luft wird durch Luftkanäle innerhalb von Deckenmodulen 17a, 17b, 17c zu verschiedenen Einlassöffnungen 12 an der Decke des Passagierraums geführt, um die gekühlte Luft durch die Einlassöffnungen in den Passagierraum 3a einströmen zu lassen. Ein zur Erzeugung der Luftströmung und zum Ansaugen der Umgebungsluft verwendeter Ventilator kann sich insbesondere in der ersten Kühleinrichtung 5a befinden.

Die von der zweiten Kühleinrichtung 5b aus der Umgebung angesaugte und gekühlte Luft wird über eine Luftverteilung 14 zu verschiedenen Einlassöffnungen 18 im Fahrerabteil 3b geführt. Die in den Passagierraum 3a und das Fahrerabteil 3b einströmende, gekühlte Luft wird durch Pfeile mit durchgezogenen Linien dargestellt.

Unten im Passagierraum 3a befindet sich eine Mehrzahl von Auslassöffnungen 13, von denen die Luft aus dem Passagierraum 3a durch von unten nach oben verlaufende Abschnitte 15 einer Abluftführung zu den Modulen 17a, 17b, 17c abgeleitet wird. Wie oben an einem dieser Abschnitte 15, am Übergang zwischen dem Modul 17a und dem Modul 17b dargestellt ist, kann sich der Abschnitt 15 an seinem oberen Ende an einer Verzweigung 21 in zumindest zwei Zweige 22a, 22b verzweigen. Alternativ dazu kann Abluft direkt aus dem Innenraum durch eine oder mehrere Öffnungen in der Kanalwand zumindest eines Abluftkanals eines der Module 17 in den Kanal einströmen (z.B. aufgrund des gegebenenfalls bestehenden Überdrucks im Innenraum) und in dem Kanal zu der Einrichtung 7 geführt werden, um diese zu kühlen.

Durch den Zweig 22a wird Abluft zu einer zu kühlenden Einrichtung 7 auf dem Dach des Wagenkastens geleitet. Durch den zweiten Zweig 22b wird Ablauf an der ersten Kühleinrichtung 5a vorbeigeleitet und mit frischer, von dieser Kühleinrichtung 5a gekühlter Luft gemischt und durch die Luftkanäle in den Modulen 17 und die Einlassöffnungen 12 in den Passagierraum 3a rezirkuliert. Eine Verzweigung 21 kann sich nicht nur an einer Stelle befinden, d.h. auch die anderen Abschnitte 15 können oben in einer solchen Verzweigung 21 enden.

Durch eine Auslassöffnung 19 oben im Fahrerabteil 3b wird Luft aus dem Fahrerabteil 3b durch eine Abluftführung 20 zu der zweiten Kühleinrichtung 5b abgeleitet. Dort kann entweder ein Teil oder die gesamte durch die Abluftführung 20 abgeleitete Luft mit gekühlter Frischluft gemischt und in das Fahrerabteil 3b rezirkuliert werden oder es kann ein Teil oder die gesamte durch die Abluftführung 20 aus dem Fahrerabteil 3b abgeleitete Luft durch einen Kanal in dem Modul 17a der zu kühlenden Einrichtung 7 zugeführt werden, um diese zu kühlen.

Die Abluftströme sind in Fig. 2 durch Pfeile mit gestrichelten Linien dargestellt.

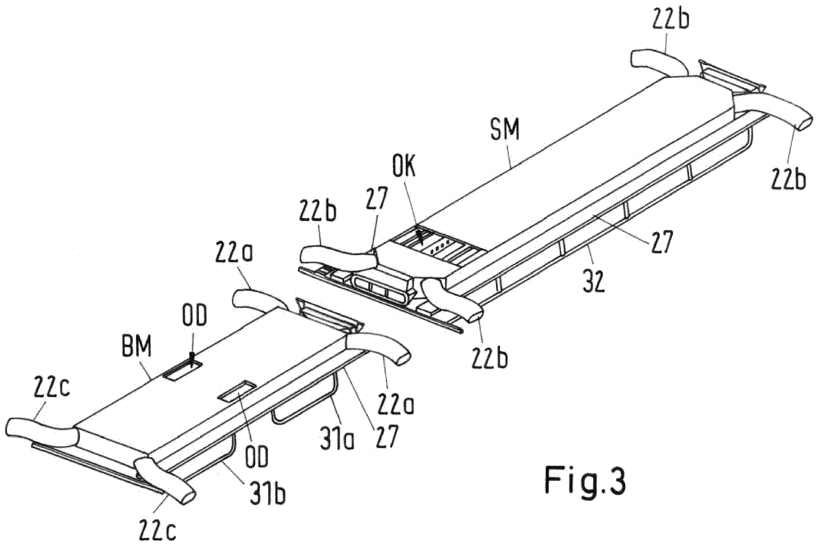

Fig. 3 zeigt zwei Deckenmodule BM, SM. Das erste Deckenmodul BM kann z.B. ähnlich wie das Deckenmodul 17a in Fig. 2 in einem Längsabschnitt eingesetzt werden, in dem sich zumindest eine zu kühlende Einrichtung befindet. Dagegen kann das zweite Deckenmodul SM insbesondere analog wie das Deckenmodul 17b in Fig. 2 in einem Längsabschnitt eingesetzt werden, in dem sich eine Kühleinrichtung zum Ansaugen von Umgebungsluft und Kühlen der Luft für eine Einleitung in den Passagierraum befindet.

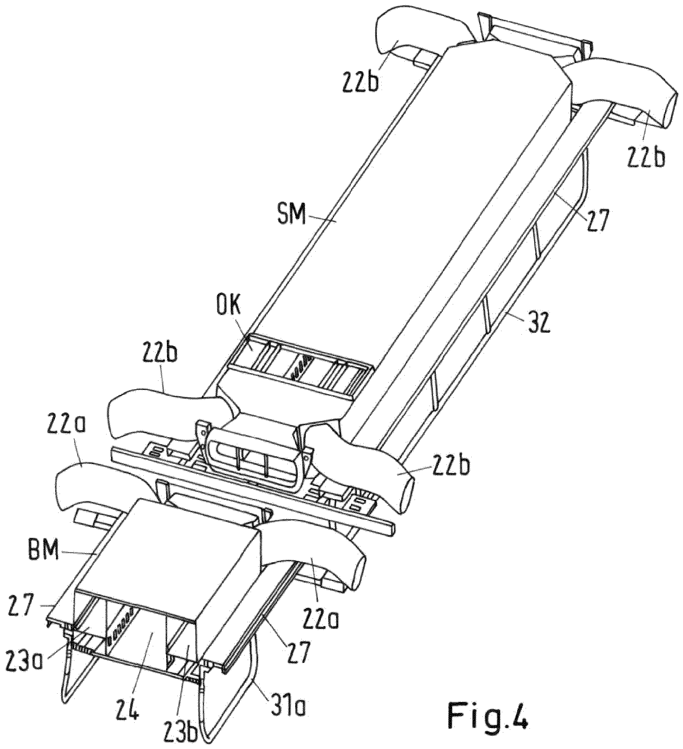

Wie noch an einem speziellen Ausführungsbeispiel näher beschrieben wird (Fig. 4 bis Fig. 6), können die in den verschiedenen Deckenmodulen BM, SM ausgebildeten Luftkanäle sowie deren Anordnung in den Deckenmodulen BM, SM gleich sein, wobei jedoch zwei der Kanäle zwar jeweils für das Führen von Abluft benutzt werden, jedoch zu unterschiedlichen Zwecken. Während die Abluftkanäle in dem ersten Deckenmodul BM zum Zuführen von Abluft zu zumindest einer zu kühlenden Einrichtung genutzt werden, werden die Abluftkanäle in dem zweiten Deckenmodul SM zum Rezirkulieren von Abluft in den Passagierraum genutzt.

Das links unten in Fig. 3 dargestellte erste Deckenmodul BM weist an seiner Oberseite zwei Öffnungen OD auf, an denen die Abluftkanäle nach oben geöffnet sind, um ein Hindurchströmen der Abluft zu zumindest einer zu kühlenden Einrichtung zu ermöglichen. Am links unten in Fig. 3 dargestellten Ende des ersten Deckenmoduls BM befinden sich zwei Luftkanalabschnitte 22c, die entfallen können, wenn das Modul BM an der Position des in Fig. 2 dargestellten Deckenmoduls 17a eingesetzt wird. In anderen Fällen werden diese Abluftführungsabschnitte 22c ebenso wie die Abluftführungsabschnitte 22a an dem weiter rechts oben in Fig. 3 dargestellten Ende des Moduls BM dazu genutzt, Abluft aus dem Passagierraum oder aus verschiedenen Abteilen im Wagenkasten-Innenraum in die Abluftkanäle des Moduls BM einzuleiten. Insbesondere können die Abschnitte 22a wie in Fig. 2 dargestellt Teil einer Verzweigung 21. Alternativ können die Abschnitte 22 an dem Modul BM entfallen und kann die Abluft durch (insbesondere seitliche, zur Außenseite des Moduls BM weisende) Öffnungen in den Abluftkanälen des Moduls BM direkt aus dem Innenraum und die Voutenbereiche seitlich des Moduls BM in die Abluftkanäle einströmen.

In entsprechender Weise befinden sich an den axialen Enden des Moduls SM Abluftführungsabschnitte 22b zum Einleiten von Abluft aus dem Passagierraum oder aus Abteilen in die beiden Abluftkanäle des Moduls SM. Im Betrieb strömt die Abluft durch die Abluftkanäle des Moduls SM bis zu der Öffnung OK oben in dem Modul SM. An dieser Öffnung OK ist die Kühleinrichtung angeschlossen, die einerseits Umgebungsluft abkühlt und in einen Frischluftkanal in dem Modul SM einleitet und andererseits die Abluft aus den Abluftkanälen des Moduls SM mit der gekühlten Umgebungsluft mischt, bevor sie die gekühlte Luft in den Frischluftkanal einleitet. Am Übergang der in Fig. 3 voneinander beabstandet gezeichneten Module BM, SM sind diese miteinander verbunden, so dass die von der Kühleinrichtung in den Frischluftkanal des Moduls SM eingeleitete gekühlte Luft (gegebenenfalls gemischt mit rezirkulierter Abluft) in einen Frischluftkanal des Moduls BM eingeleitet wird. Daher ist es auch über den Frischluftkanal des Moduls BM möglich, gekühlte Luft in den Passagierraum oder verschiedene Abteile einzuleiten. Eines dieser Abteile kann bei einer Modifikation der hier beschriebenen Anordnung auch ein Fahrerabteil sein. In diesem Fall kann auf die zweite Kühleinrichtung 5b gemäß Fig. 2 und optional auch auf zumindest einen Teil der Luftkanäle des Fahrerabteils verzichtet werden.

Fig. 3 zeigt außerdem, dass die Module SM, BM seitlich jeweils in Längsrichtung verlaufende Befestigungsbereiche 27 aufweisen, über die sie mit anderen Teilen der Deckenkonstruktion verbunden werden können. Ferner erstrecken sich von diesen Befestigungsbereichen 27 nach unten Haltestangen 31a, 31b an dem ersten Modul BM und Haltestangen 32 an dem zweiten Modul SM.

Aus Fig. 4 ist zusätzlich zu Fig. 3 die Aufteilung des ersten Moduls BM in einen zentralen Frischluftkanal 24 und zwei auf den gegenüberliegenden Seiten des Frischluftkanals 24 verlaufende Abluftkanäle 23a, 23b erkennbar. Der Frischluftkanal 24 und die Abluftkanäle 23 verlaufen parallel zueinander in Längsrichtung des Moduls BM und damit auch in Längsrichtung des Schienenfahrzeugs.

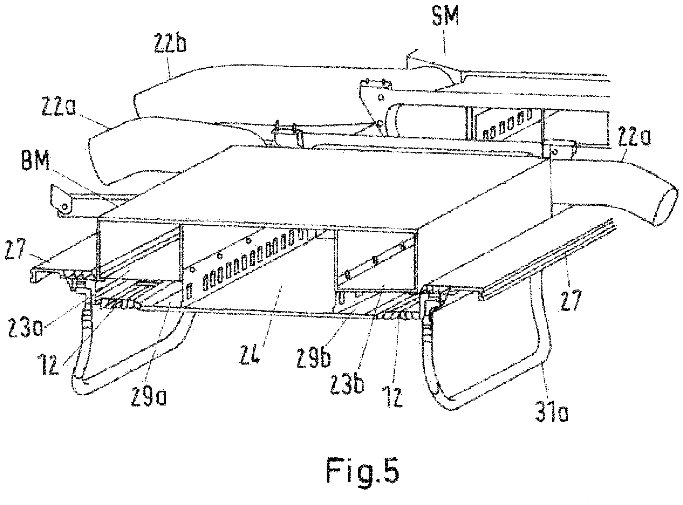

Fig. 5 zeigt die innere Gestaltung des Moduls BM mit den Kanälen 23, 24 vergrößert. Auch ist erkennbar, dass sich unterhalb der Abluftkanäle 23a, 23b jeweils ein Seitenkanal 29a, 29b des Frischluftkanals 24 befindet, wobei die Seitenkanäle 29 über Durchtrittsöffnungen zwischen dem Frischluftkanal 24 und den Seitenkanälen 29 mit Frischluft versorgt werden und über Eintrittsöffnungen 12 an der Unterseite der Seitenkanäle 29 in den Passagierraum abgeben.

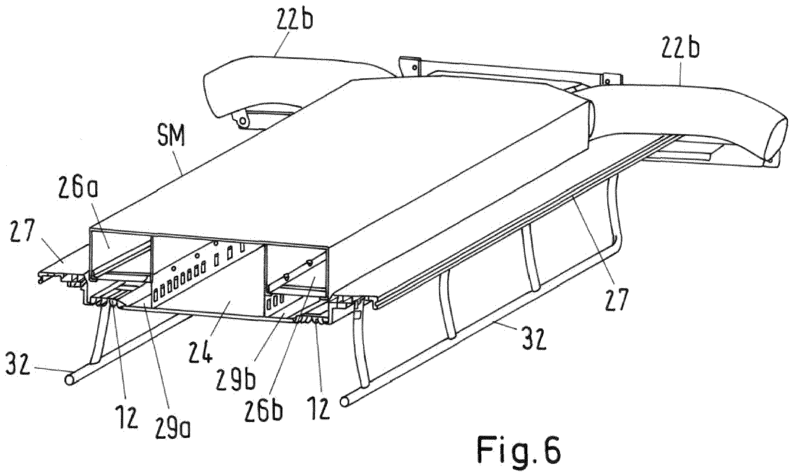

Fig. 6 zeigt ebenfalls vergrößert, ähnlich wie in Fig. 5 für das Modul BM, die innere Gestaltung des anderen Moduls SM. Man erkennt wie in Fig. 5 den zentralen Frischluftkanal 24 und die seitlich davon angeordneten Abluftkanäle 26a, 26b sowie die darunter angeordneten Seitenkanäle 29a, 29b des Frischluftkanals 24. Die Funktion und die Ausgestaltung der Kanäle ist die gleiche wie bei dem Modul BM in Fig. 5, wobei (wie oben erwähnt) durch die Abluftkanäle 26a, 26b Abluft rezirkuliert wird.

Modifikationen der Ausführungsbeispiele der Fig. 2 bis 6 sind möglich. Z.B. können die Deckenmodule BM und SM an ihrem jeweiligen Übergangsbereich so verbunden sein, dass auch die Abluftkanäle miteinander verbunden sind. Auf diese Weise wird ein in Längsrichtung des Schienenfahrzeugs durchgehender Abluftkanal erzeugt. Dann ist es z.B. möglich, einen der beiden Abluftkanäle für die Rezirkulation und den anderen Abluftkanal für die Kühlluft der externen Einrichtungen zu nutzen. In jedem Fall jedoch vereinfacht die gleiche Innengestaltung der Deckenmodule ihre Herstellung und Montage. Insbesondere kann sich jedes der Module über einen Längsabschnitt eines Schienenfahrzeugs erstrecken, der durch einen entsprechenden Abschnitt eines Wagenkastens gebildet wird. Ein Längsabschnitt kann z.B. einem Passagierraum (Großraum) entsprechen. Hierfür ist insbesondere das zweite Deckenmodul SM geeignet. Ein anderer Abschnitt kann einem Übergangsbereich zwischen zwei solchen großen Passagierräumen entsprechen, wenn sich in dem Übergangsbereich ein Durchgang zwischen den beiden Passagierräumen befindet. Hierfür ist insbesondere das erste Deckenmodul BM geeignet. In diesem Übergangsbereich kann sich unterhalb des Wagenkastens insbesondere ein Drehgestell mit Rädern des Schienenfahrzeugs befinden.

## Patentansprüche

1. Schienenfahrzeug (1), wobei das Schienenfahrzeug (1) aufweist:
- einen Wagenkasten (2) mit einem Innenraum (3) zum Transport von Personen,
- eine Kühleinrichtung (5) zum Kühlen von Luft, die in den Innenraum (3) eingeleitet wird,
- zumindest eine elektrische und/oder elektronische oder andere zu kühlende Einrichtung (7), die außerhalb des Innenraums (3) des Wagenkastens (2) angeordnet ist,
- eine Abluftführung (15, 22a, 23) mit zumindest einer Auslassöffnung (13) im Innenraum (3) oder am Rand des Innenraums (3), wobei die Abluftführung (15, 22a, 23) ausgestaltet ist, Luft aus dem Innenraum (3) heraus von der Auslassöffnung (13) zu der zumindest einen zu kühlenden Einrichtung (7) zu führen, um die Einrichtung (7) zu kühlen,
**dadurch gekennzeichnet, dass**
- die Abluftführung (15, 22a, 23) eine Verzweigung (21) aufweist,
- ein erster Zweig (22a) der Verzweigung (21) zu der zumindest einen zu kühlenden Einrichtung (7) führt,
- ein zweiter Zweig (22b) der Verzweigung (21) ausgestaltet ist, Luft für eine Rezirkulation zurück in den Innenraum (3) zu führen,
- die Verzweigung (21) mit zumindest einem Ventil oder einer anderen Stelleinrichtung zur Einstellung eines Luftströmungswiderstandes kombiniert ist, sodass der Luftströmungswiderstand in zumindest einem der Zweige so einstellbar ist, dass ein gewünschter Anteil der aus dem Innenraum (3) abgeleiteten Abluft zu der zumindest einen zu kühlenden Einrichtung (7) geleitet wird.

2. Schienenfahrzeug nach dem vorhergehenden Anspruch, wobei die zu kühlende Einrichtung (7) auf dem Dach und/oder in dem Dach des Wagenkastens (2) angeordnet ist und die Abluftführung (15, 22a, 23) aus dem Innenraum (3) des Wagenkastens (2) heraus zu der Einrichtung (7) führt.

3. Schienenfahrzeug nach dem vorhergehenden Anspruch, wobei die Abluftführung (15, 22a, 23) einen ersten Luftkanal (23) aufweist, der entlang dem Dach des Wagenkastens (2) verläuft und der Teil einer Decke des Innenraums (3) ist, wobei ein zweiter Kanal (24) der Decke ausgestaltet ist, die von der Kühleinrichtung (5) gekühlte Luft zu zumindest einer Einlassöffnung (12) zu führen, durch die beim Betrieb des Schienenfahrzeugs (1) die gekühlte Luft in den Innenraum (3) eingeleitet wird.

4. Schienenfahrzeug nach einem der beiden vorhergehenden Ansprüche, wobei sich die Auslassöffnung (13) unterhalb der Decke des Innenraums (3) befindet.

5. Schienenfahrzeug nach einem der vorhergehenden Ansprüche, wobei sich die Auslassöffnung (13) im Bereich des Bodens des Innenraums (3) befindet und ein Abschnitt (15) der Abluftführung von unten nach oben zu der Decke des Innenraums (3) führt.

6. Schienenfahrzeug nach einem der vorhergehenden Ansprüche, wobei ein Abschnitt (15) der Abluftführung (15, 22a, 23) ausgestaltet ist, Luft aus dem Innenraum (3) sowohl für die Kühlung der zumindest einen zu kühlenden Einrichtung (7) als auch Luft für die Rezirkulation in den Innenraum (3) zu führen.

7. Verfahren zum Herstellen eines Schienenfahrzeugs (1), wobei:
- ein Wagenkasten (2) mit einem Innenraum (3) zum Transport von Personen bereitgestellt wird,
- eine Kühleinrichtung (5) zum Kühlen von Luft derart mit dem Wagenkasten (2) verbunden wird, dass beim Betrieb gekühlte Luft von der Kühleinrichtung (5) in den Innenraum (3) eingeleitet wird,
- zumindest eine elektrische und/oder elektronische oder andere zu kühlende Einrichtung (7) außerhalb des Innenraums (3) des Wagenkastens (2) angeordnet wird,
- eine Abluftführung (15, 22a, 23) mit zumindest einer Auslassöffnung (13) im Innenraum (3) oder am Rand des Innenraums (3) verbunden wird, wobei die Abluftführung (15, 22a, 23) ausgestaltet wird, Luft aus dem Innenraum (3) heraus von der Auslassöffnung (13) zu der zumindest einen zu kühlenden Einrichtung (7) zu führen, um die Einrichtung (7) zu kühlen,
**dadurch gekennzeichnet, dass**
- die Abluftführung (15, 22a, 23) eine Verzweigung (21) aufweist,
- ein erster Zweig (22a) der Verzweigung (21) zu der zumindest einen zu kühlenden Einrichtung (7) geführt wird,
- ein zweiter Zweig (22b) der Verzweigung (21) ausgestaltet wird, Luft für eine Rezirkulation zurück in den Innenraum (3) zu führen,
- die Verzweigung (21) mit zumindest einem Ventil oder einer anderen Stelleinrichtung zur Einstellung eines Luftströmungswiderstandes kombiniert ist, sodass der Luftströmungswiderstand in zumindest einem der Zweige so einstellbar ist, dass ein gewünschter Anteil der aus dem Innenraum (3) abgeleiteten Abluft zu der zumindest einen zu kühlenden Einrichtung (7) geleitet wird.

8. Verfahren nach dem vorhergehenden Anspruch, wobei die zu kühlende Einrichtung (7) auf dem Dach und/oder in dem Dach des Wagenkastens (2) angeordnet wird und die Abluftführung (15, 22a, 23) derart ausgestaltet wird, dass die Abluftführung (15, 22a, 23) aus dem Wagenkasten (2) heraus zu der Einrichtung (7) führt.

9. Verfahren nach dem vorhergehenden Anspruch, wobei als Teil der Abluftführung (15, 22a, 23) ein erster Luftkanal (23) vorgesehen wird, der entlang dem Dach des Wagenkastens (2) verläuft und der Teil einer Decke des Innenraums (3) ist, wobei als weiterer Teil der Decke ein zweiter Kanal (24) vorgesehen wird, der beim Betrieb die von der Kühleinrichtung (5) gekühlte Luft zu zumindest einer Einlassöffnung (12) führt, durch die die gekühlte Luft in den Innenraum (3) eingeleitet wird.

10. Verfahren nach einem der beiden vorhergehenden Ansprüche, wobei die Auslassöffnung (13) unterhalb der Decke des Innenraums (3) angeordnet wird.

11. Verfahren nach einem der beiden vorhergehenden Ansprüche, wobei die Auslassöffnung (13) im Bereich des Bodens des Innenraums (3) angeordnet wird und ein Abschnitt (15) der Abluftführung derart angeordnet wird, dass er von unten nach oben zu der Decke des Innenraums (3) führt.

12. Verfahren nach einem der vorhergehenden Ansprüche, wobei ein Abschnitt (15) der Abluftführung (15, 22a, 23) ausgestaltet wird, Luft aus dem Innenraum (3) sowohl für die Kühlung der zumindest einen zu kühlenden Einrichtung (7) als auch Luft für die Rezirkulation in den Innenraum (3) zu führen.

## Claims

1. A rail vehicle (1), wherein the rail vehicle (1) comprises:
- a railcar body (2) having an interior (3) for transporting people,
- a cooling device (5) for cooling air that is introduced into the interior (3),
- at least one electrical and/or electronic or other device (7) to be cooled that is arranged outside of the interior (3) of the railcar body (2),
- an exhaust air guide (15, 22a, 23) having at least one outlet opening (13) in the interior (3) or on the edge of the interior (3), the exhaust air guide (15, 22a, 23) being designed to guide air out of the interior (3) from the outlet opening (13) to the at least one device (7) to be cooled in order to cool the device (7),
**characterized in that**
- the exhaust air guide (15, 22a, 23) has a branching (21),
- a first branch (22a) of the branching (21) leads to the at least one device (7) to be cooled,
- a second branch (22b) of the branching (21) is designed to guide air back into the interior (3) for recirculation,
- the branching (21) is combined with at least one valve or another adjusting device for adjusting an air flow resistance so that the air flow resistance in at least one of the branches is adjustable such that a desired portion of the exhaust air conducted out of the interior (3) is conducted to the at least one device (7) to be cooled.

2. The rail vehicle according to the previous claim, wherein the device (7) to be cooled is arranged on the roof and/or in the roof of the railcar body (2) and the exhaust air guide (15, 22a, 23) leads out of the interior (3) of the railcar body (2) to the device (7).

3. The rail vehicle according to the previous claim, wherein the exhaust air guide (15, 22a, 23) has a first air channel (23) that extends along the roof of the railcar body (2) and that is part of a ceiling of the interior (3), wherein a second channel (24) of the ceiling is designed to guide the air cooled by the cooling device (5) to at least one inlet opening (12) through which the cooled air is introduced into the interior (3) during operation of the rail vehicle (1).

4. The rail vehicle according to either of the two previous claims, wherein the outlet opening (13) is disposed beneath the ceiling of the interior (3).

5. The rail vehicle according to any of the previous claims, wherein the outlet opening (13) is disposed in the region of the floor of the interior (3) and a section (15) of the exhaust air guide leads from below upward to the ceiling of the interior (3).

6. The rail vehicle according to any of the previous claims, wherein a section (15) of the exhaust air guide (15, 22a, 23) is designed to guide air out of the interior (3) both for cooling the at least one device (7) to be cooled and to guide air for the recirculation into the interior (3).

7. A method for producing a rail vehicle (1), wherein:
- a railcar body (2) having an interior (3) for transporting persons is provided,
- a cooling device (5) for cooling air is connected to the railcar body (2) such that during operation cooled air is introduced into the interior (3) from the cooling device (5),
- at least one electrical and/or electronic or other device (7) to be cooled is arranged outside of the interior (3) of the railcar body (2),
- an air exhaust guide (15, 22a, 23) is connected to at least one outlet opening (13) in the interior (3) or on the edge of the interior (3), wherein the exhaust air guide (15, 22a, 23) is designed to guide air out of the interior (3) from the inlet opening (13) to the at least one device (7) to be cooled in order to cool the device (7),
**characterized in that**
- the exhaust air guide (15, 22a, 23) has a branching (21),
- a first branch (22a) of the branching (21) is guided to the at least one device (7) to be cooled,
- a second branch (22b) of the branching (21) is designed to guide air back into the interior (3) for recirculation,
- the branching (21) is combined with at least one valve or another adjusting device for adjusting an air flow resistance so that the air flow resistance may be adjusted in at least one of the branches such that a desired portion of the air conducted out of the interior (3) is conducted to the at least one device (7) to be cooled.

8. The method according to the previous claim, wherein the device (7) to be cooled is arranged on the roof and/or in the roof of the railcar body (2) and the exhaust air guide (15, 22a, 23) is designed such that the exhaust air guide (15, 22a, 23) leads out of the railcar body (2) to the device (7).

9. The method according to the previous claim, wherein a first air channel (23) is provided as part of the exhaust air guide (15, 22a, 23) and extends along the roof of the railcar body (2) and is part of a ceiling of the interior (3), wherein a second channel (24) is provided as a further part of the ceiling which second channel (24) guides during operation the air cooled by the cooling device (5) to at least one inlet opening (12) through which the cooled air is introduced into the interior (3).

10. The method according to either of the two previous claims, wherein the outlet opening (13) is arranged below the ceiling of the interior (3).

11. The method according to either of the two previous claims, wherein the outlet opening (13) is arranged in the region of the floor of the interior (3) and a section (15) of the exhaust air guide is arranged such that it leads from below upward to the ceiling of the interior (3).

12. The method according to any of the previous claims, wherein a section (15) of the exhaust air guide (15, 22a, 23) is designed to guide air out of the interior (3) both for cooling the at least one device (7) to be cooled and to guide air for the recirculation into the interior (3).

## Revendications

1. Véhicule ferroviaire (1), dans lequel le véhicule ferroviaire (1) présente :
- une caisse (2) avec un espace intérieur (3) pour le transport de personnes,
- un dispositif de refroidissement (5) pour le refroidissement d'air qui est introduit dans l'espace intérieur (3),
- au moins un dispositif (7) électrique et/ou électronique ou autre à refroidir qui est agencé en dehors de l'espace intérieur (3) de la caisse (2),
- un guidage d'air d'évacuation (15, 22a, 23) avec au moins une ouverture de sortie (13) dans l'espace intérieur (3) ou au bord de l'espace intérieur (3), dans lequel le guidage d'air d'évacuation (15, 22a, 23) est configuré afin de guider de l'air hors de l'espace intérieur (3) de l'ouverture de sortie (13) à l'au moins un dispositif (7) à refroidir afin de refroidir le dispositif (7),
**caractérisé en ce que**
- le guidage d'air d'évacuation (15, 22a, 23) présente une ramification (21),
- une première branche (22a) de la ramification (21) mène à l'au moins un dispositif (7) à refroidir,
- une seconde branche (22b) de la ramification (21) est configurée afin de ramener de l'air dans l'espace intérieur (3) pour une remise en circulation,
- la ramification (21) est combinée à au moins une soupape ou un autre dispositif de commande pour le réglage d'une résistance à l'écoulement d'air de sorte que la résistance à l'écoulement d'air puisse être réglée dans au moins une des branches afin qu'une part souhaitée de l'air d'évacuation dérivé de l'espace intérieur (3) soit conduite vers l'au moins un dispositif (7) à refroidir.

2. Véhicule ferroviaire selon la revendication précédente, dans lequel le dispositif (7) à refroidir est agencé sur le toit et/ou dans le toit de la caisse (2) et le guidage d'air d'évacuation (15, 22a, 23) mène hors de l'espace intérieur (3) de la caisse (2) vers le dispositif (7).

3. Véhicule ferroviaire selon la revendication précédente, dans lequel le dispositif d'air d'évacuation (15, 22a, 23) présente un premier canal d'air (23) qui s'étend le long du toit de la caisse (2) et fait partie d'un plafond de l'espace intérieur (3), dans lequel un second canal (24) du plafond est configuré afin de guider l'air refroidi par le dispositif de refroidissement (5) vers au moins une ouverture d'entrée (12), au travers de laquelle lors du fonctionnement du véhicule ferroviaire (1) l'air refroidi est introduit dans l'espace intérieur (3).

4. Véhicule ferroviaire selon l'une quelconque des deux revendications précédentes, dans lequel l'ouverture de sortie (13) se trouve sous le plafond de l'espace intérieur (3).

5. Véhicule ferroviaire selon l'une quelconque des revendications précédentes, dans lequel l'ouverture de sortie (13) se trouve dans la zone du sol de l'espace intérieur (3) et une section (15) du guidage d'air d'évacuation mène du bas vers le haut vers le plafond de l'espace intérieur (3).

6. Véhicule ferroviaire selon l'une quelconque des revendications précédentes, dans lequel une section (15) du guidage d'air d'évacuation (15, 22a, 23) est configurée afin de mener de l'air de l'espace intérieur (3) non seulement pour le refroidissement de l'au moins un dispositif (7) à refroidir mais aussi de l'air pour la remise en circulation dans l'espace intérieur (3).

7. Procédé de fabrication d'un véhicule ferroviaire (1), dans lequel :
- une caisse (2) avec un espace intérieur (3) est mise à disposition pour le transport de personnes,
- un dispositif de refroidissement (5) pour le refroidissement de l'air est raccordé à la caisse (2) de telle manière que de l'air refroidi lors du fonctionnement du dispositif de refroidissement (5) soit introduit dans l'espace intérieur (3),
- au moins un dispositif (7) électrique et/ou électronique ou autre à refroidir est agencé en dehors de l'espace intérieur (3) de la caisse (2),
- un guidage d'air d'évacuation (15, 22a, 23) est raccordé à au moins une ouverture de sortie (13) dans l'espace intérieur (3) ou au bord de l'espace intérieur (3), dans lequel le guidage d'air d'évacuation (15, 22a, 23) est configuré afin de guider de l'air hors de l'espace intérieur (3) de l'ouverture de sortie (13) à l'au moins un dispositif (13) à refroidir pour refroidir le dispositif (7),
**caractérisé en ce que**
- le guidage d'air d'évacuation (15, 22a, 23) présente une ramification (21),
- une première branche (22a) de la ramification (21) est guidée vers l'au moins un dispositif (7) à refroidir,
- une seconde branche (22b) de la ramification (21) est configurée afin de ramener de l'air dans l'espace intérieur (3) pour une remise en circulation,
- la ramification (21) est combinée à au moins une soupape ou un autre dispositif de commande pour le réglage d'une résistance à l'écoulement d'air de sorte que la résistance à l'écoulement d'air puisse être réglée dans au moins une des branches afin qu'une part souhaitée de l'air d'évacuation dérivé de l'espace intérieur (3) soit conduite vers l'au moins un dispositif (7) à refroidir.

8. Procédé selon la revendication précédente, dans lequel le dispositif (7) à refroidir est agencé sur le toit et/ou dans le toit de la caisse (2) et le guidage d'air d'évacuation (15, 22a, 23) est configuré de telle manière que le guidage d'air d'évacuation (15, 22a, 23) mène hors de la caisse (2) vers le dispositif (7).

9. Procédé selon la revendication précédente, dans lequel en tant que partie du guidage d'air d'évacuation (15, 22a, 23) un premier canal d'air (23) est prévu, lequel s'étend le long du toit de la caisse (2) et fait partie d'un plafond de l'espace intérieur (3), dans lequel en tant qu'autre partie du plafond un second canal (24) est prévu, lequel mène lors du fonctionnement l'air refroidi par le dispositif de refroidissement (5) vers au moins une ouverture d'entrée (12) au travers de laquelle l'air refroidi est introduit dans l'espace intérieur (3).

10. Procédé selon l'une quelconque des deux revendications précédentes, dans lequel l'ouverture de sortie (13) est agencée sous le plafond de l'espace intérieur (3).

11. Procédé selon l'une quelconque des deux revendications précédentes, dans lequel l'ouverture de sortie (13) est agencée dans la zone du sol de l'espace intérieur (3) et une section (15) du guidage d'air d'évacuation est agencée de telle manière qu'elle mène du bas vers le haut vers le plafond de l'espace intérieur (3).

12. Procédé selon l'une quelconque des revendications précédentes, dans lequel une section (15) du guidage d'air d'évacuation (15, 22a, 23) est configurée afin de guider de l'air de l'espace intérieur (3) non seulement pour le refroidissement de l'au moins un dispositif (7) à refroidir mais aussi de l'air pour la remise en circulation dans l'espace intérieur (3).
